# FASCICULE DE BREVET EUROPEEN

(11) **EP 3 558 714 B1**
(45) Date de publication et mention de la délivrance du brevet: **26.10.2022**
(21) Numéro de dépôt: 17838049.9
(22) Date de dépôt: 20.12.2017
(51) Int. Cl.: B60C 1/00, C08C 19/10, C08C 19/22, C08L 9/06

(54) **PNEUMATIQUE POUR VEHICULE PORTANT DES LOURDES CHARGES COMPRENANT UNE NOUVELLE BANDE DE ROULEMENT**
REIFEN MIT NEUER LAUFFLÄCHE FÜR EIN FAHRZEUG ZUM TRAGEN VON SCHWEREN LASTEN
TYRE FOR A VEHICLE CARRYING HEAVY LOADS, COMPRISING A NEW TREAD

(30) Priorité: 20.12.2016 FR 1662905
(43) Date de publication de la demande: 30.10.2019
(73) Titulaire: Compagnie Générale des Etablissements Michelin, 63000 Clermont-Ferrand (FR)
(72) Inventeur: FLEURY, Etienne, 63040 Clermont-Ferrand cedex 9 (FR); GARG, Akhilesh, 63040 Clermont-Ferrand cedex 9 (FR)
(74) Mandataire: Bocchi, Brigitte
(86) Numéro de dépôt international: PCT/FR2017/053743
(87) Numéro de publication internationale: WO 2018/115747

(56) Documents cités:
- WO-A1-2014/016340
- WO-A1-2015/059274
- WO-A1-2015/177104
- FR-A1- 3 023 844

## Description

Le domaine de la présente invention est celui des pneumatiques pour les véhicules portant de lourdes charges, en particulier les véhicules poids-lourds, les bus, les véhicules de génie civil, etc.

Les pneumatiques destinés aux véhicules portant de lourdes charges comportent des caractéristiques propres de dimensions, de robustesse, d'architecture qui les distinguent des autres pneumatiques, notamment des pneumatiques pour équiper des véhicules de tourisme. Leurs bandes de roulement doivent obéir à un grand nombre de performances techniques souvent antinomiques, en particulier une adhérence élevée sur sol mouillé, une faible résistance au roulement et une bonne résistance à l'usure.

En effet, certains véhicules portant des lourdes charges sont destinés à rouler sur des trajets de plus en plus longs, du fait de l'amélioration du réseau routier et de la croissance du réseau autoroutier dans le monde. Pour des questions de sécurité, l'adhérence sur sol mouillé doit être élevée. Par ailleurs, l'usure de la bande de roulement de ces pneumatiques doit être la plus faible possible ainsi que les pertes d'énergie liées au roulement.

Or, il est bien connu de l'homme de l'art que l'amélioration d'une performance pour des pneumatiques est souvent obtenue au détriment des autres performances.

Par exemple, une façon de conférer au pneumatique une adhérence élevée sur sol mouillée est d'utiliser, pour la bande de roulement, une composition de caoutchouc qui présente un bon potentiel hystérétique. Or, en même temps, cette bande de roulement doit avoir une contribution à la résistance au roulement la plus faible possible pour limiter les pertes d'énergie liées au roulement ; c'est-à-dire qu'elle doit être la moins hystérique possible.

Un autre exemple de performances antinomiques est le suivant. Pour améliorer la résistance à l'usure, l'homme du métier sait qu'il est nécessaire que la bande de roulement ait une bonne rigidité. Une telle rigidité peut être obtenue notamment en augmentant le taux de charge renforçante dans les compositions de caoutchouc constitutives de ces bandes de roulement. Mais l'augmentation de ce taux de charges renforçantes engendre une augmentation de l'hystérèse du pneumatique et donc un risque de pénaliser les propriétés de résistances au roulement.

Il existe donc un besoin permanent de fournir un pneumatique pour les véhicules portant de lourdes charges ayant une bande de roulement dont l'adhérence sur sol mouillé est élevée sans que soient pénalisées la résistance au roulement et la résistance à l'usure.

Au vu de ce qui précède, il est un objectif de fournir un pneumatique destiné à équiper un véhicule portant de lourdes charges, ce pneumatique comportant une bande de roulement qui satisfasse un compromis de performances adhérence sur sol mouillé/résistance au roulement/résistance à l'usure.

Les Demanderesses ont découvert lors de leur recherches que la combinaison spécifique d'un copolymère à base de styrène et de butadiène, ledit copolymère étant modifié par un agent de modification spécifique, d'une charge renforçante comprenant à titre majoritaire de la silice et d'un système plastifiant à un taux spécifique permet d'obtenir une composition de caoutchouc utilisable dans une bande de roulement pour pneumatique pour les véhicules portant de lourdes charges répondant à cette problématique.

Ainsi, l'invention concerne un pneumatique destiné à équiper un véhicule portant de lourdes charges, ce pneumatique comportant une bande de roulement ayant au moins une composition de caoutchouc à base d'au moins:
- une matrice élastomère comprenant à titre majoritaire un copolymère à base de styrène et de butadiène ayant une température de transition vitreuse Tg strictement supérieure à -65°C et inférieure ou égale à -30°C,
- une charge renforçante comprenant à titre majoritaire de la silice,
- un système de réticulation chimique,
- un agent de couplage entre la matrice élastomère et la charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition va de 2 à 17 pce, de préférence de 2 à 12 pce et,
- un agent de modification dudit copolymère à base de styrène et de butadiène, éventuellement déjà greffé sur ledit copolymère, ledit agent de modification étant un composé 1,3-dipolaire de formule générale (I) :

   A-E-D (I)

   o le symbole D représente un groupe fonctionnel comprenant au moins un atome d'azote et étant susceptible de se lier audit copolymère par une cycloaddition de type [3+2] sur une double liaison carbone-carbone de la chaîne dudit copolymère,
   o le symbole E représente un groupe espaceur divalent reliant le groupe D au groupe A,
   o A représente un groupe fonctionnel choisi parmi les alkyles en C₁-C₂₀, les alkylaryles en C₇-C₁₈, les arylalkyles en C₇-C₁₈, les hétérocycles azotés de 5 à 6 atomes éventuellement substitués, les hétérocycles soufrés de 5 à 6 atomes éventuellement substitués, les groupes esters, les groupes phosphates, les groupes dialkylaminos et les groupes associatifs comprenant au moins un atome d'azote.

Préférentiellement, le groupe fonctionnel D de l'agent de modification comprend une fonction oxyde de nitrile, une fonction nitrone ou une fonction nitrile imine.

Préférentiellement, le groupe espaceur E est une chaîne alkyle linéaire ou ramifiée en C₁-C₂₄, de préférence C₁-C₁₀ éventuellement comprenant un ou plusieurs hétéroatomes choisis parmi les atomes d'azote, de soufre et d'oxygène.

Préférentiellement, le groupe D de l'agent de modification est un groupe de formule (II) : 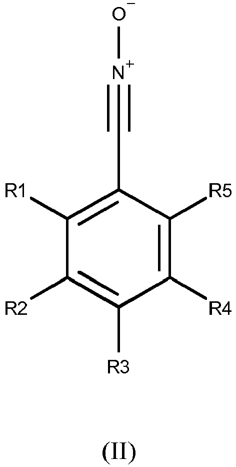 dans laquelle :
- R1, R2, R3, R4, R5, identiques ou différents, représentent un atome d'hydrogène, un atome d'halogène, un alkyle en C₁-C₅, un alcoxyle en C₁-C₅ ou une liaison covalente permettant le rattachement au groupe espaceur E;
- à la condition qu'au moins un des R1, R2, R3, R4, R5 représente ladite liaison covalente.

Préférentiellement, le groupe A est un groupe associatif comprenant au moins un atome d'azote, ledit groupe associatif étant choisi parmi les formules suivantes (IV) à (VIII) : 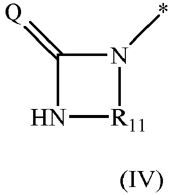 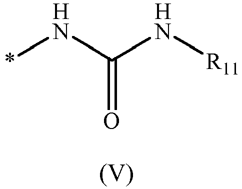 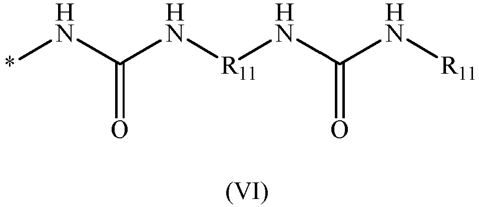 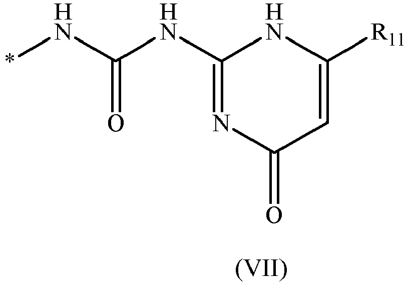 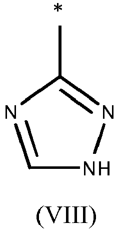 dans lesquelles:
- R11 représente un groupe hydrocarboné pouvant éventuellement contenir des hétéroatomes,
- Q représente un atome d'oxygène ou de soufre ou NH, de préférence un atome d'oxygène, et
- le symbole ^{∗} représente le rattachement au groupe espaceur E.

Préférentiellement, l'agent de modification est choisi parmi les composés de formules ci-dessous (IX) à (XVIII) et leurs formes mésomères :

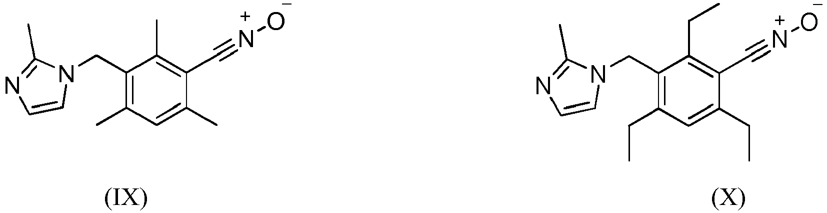

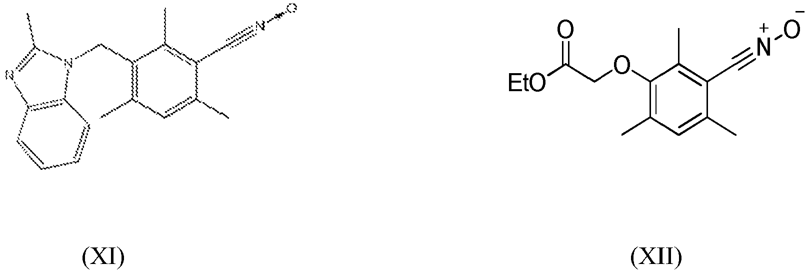

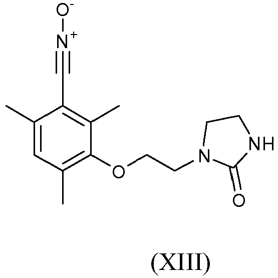

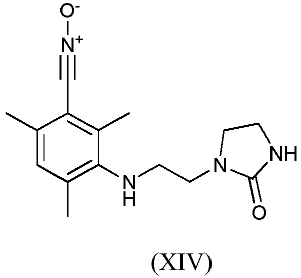

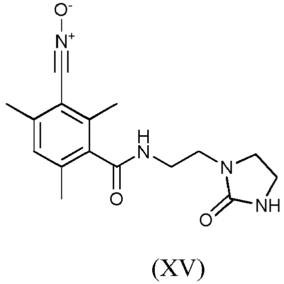

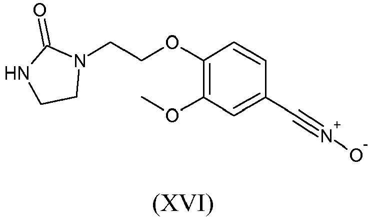

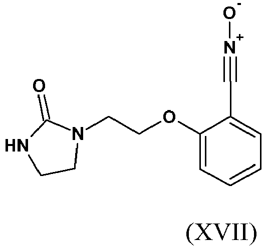

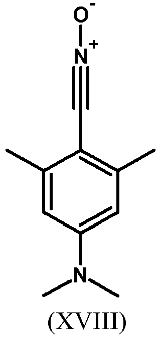

Plus préférentiellement, l'agent de modification est choisi parmi les composés de formules (XIII), (XIV), (XV) et (XVII) et leurs formes mésomères.

Préférentiellement, le taux d'agent de modification de formule (I) dans la composition va de 0,01 à 50 % molaire, de préférence de 0,01 à 5 % molaire et de façon plus préférentielle de 0,01% à 3 % molaire.

Préférentiellement, le copolymère à base de styrène et de butadiène a une température de transition vitreuse allant de -60 à -40°C.

Préférentiellement, le copolymère à base de styrène et de butadiène est constitué de monomères de styrène et de monomères de butadiène.

Préférentiellement, la matrice élastomère comprend en outre au moins un deuxième élastomère diénique différent du copolymère à base de styrène et de butadiène.

Préférentiellement, le deuxième élastomère diénique est choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence le deuxième élastomère diénique est un polybutadiène.

Préférentiellement, le taux du deuxième élastomère diénique va de 5 à 49 pce, de préférence de 15 à 35 pce.

Préférentiellement, la composition comprend en outre du noir de carbone.

Préférentiellement, lequel le taux de la charge renforçante va de 55 à 200 pce, de préférence de 55 à 150 pce, de manière plus préférée de 55 à 80 pce.

Préférentiellement, la résine plastifiante a une température de transition vitreuse Tg supérieure ou égale à 30°C, de préférence allant de à 30 à 100°C.

Préférentiellement, la résine plastifiante est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les mélanges de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Préférentiellement, le système plastifiant comprend de 0 à 2 pce d'au moins un agent plastifiant liquide à température ambiante.

Préférentiellement, la composition est exempte d'un agent plastifiant liquide à température ambiante.

Préférentiellement, le pneumatique tel que défini ci-dessus est destiné à équiper un véhicule poids-lourd ou un bus.

### I - DESCRIPTION DETAILLEE DE L'INVENTION

L'invention a pour objet un pneumatique destiné à équiper un véhicule portant de lourdes charges, ce pneumatique comportant une bande de roulement ayant au moins une composition de caoutchouc à base d'au moins:
- une matrice élastomère comprenant à titre majoritaire un copolymère à base de styrène et de butadiène ayant une température de transition vitreuse Tg strictement supérieure à -65°C et inférieure ou égale à -30°C,
- une charge renforçante comprenant à titre majoritaire de la silice,
- un système de réticulation chimique,
- un agent de couplage entre la matrice d'élastomère et la charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition va de 2 à 17 pce, de préférence de 2 à 12 pce et,
- un agent de modification dudit copolymère à base de styrène et de butadiène, éventuellement déjà greffé sur ledit copolymère, ledit agent de modification étant un composé 1,3-dipolaire de formule générale (I) :

   A-E-D (I)

   o le symbole D représente un groupe fonctionnel comprenant au moins un atome d'azote et étant susceptible de se lier audit copolymère par une cycloaddition de type [3+2] sur une double liaison carbone-carbone de la chaîne dudit copolymère,
   o le symbole E représente un groupe espaceur divalent reliant le groupe D au groupe A,
   o A représente un groupe fonctionnel choisi parmi les alkyles en C₁-C₂₀, les alkylaryles en C₇-C₁₈, les arylalkyles en C₇-C₁₈, les hétérocycles azotés de 5 à 6 atomes éventuellement substitués, les hétérocycles soufrés de 5 à 6 atomes éventuellement substitués, les groupes esters, les groupes phosphates, les groupes dialkylaminos et les groupes associatifs comprenant au moins un atome d'azote.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Par « pneumatique destiné à équiper un véhicule portant de lourdes charges » on entend de manière générique tout pneumatique destiné à équiper des véhicules poids-lourds, des bus, des véhicules de génie civil, des véhicules agricoles ou des avions. L'invention est particulièrement bien adaptée aux pneumatiques destiné à équiper des véhicules poids-lourds ou des bus.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Par « matrice élastomère » ou « matrice élastomérique », on entend l'ensemble du ou des élastomère(s) présent(s) dans la composition de caoutchouc.

Par élastomère (ou indistinctement caoutchouc) qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non). Ces élastomères sont aussi appelés élastomères diéniques.

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (pourcentage molaire) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15% pourcentage molaire). Dans la catégorie des élastomères diéniques "essentiellement insaturés", on entend en particulier par élastomère diénique « fortement insaturé » un élastomère diénique ayant un taux de motifs d'origine diénique (diènes conjugués) qui est supérieur à 50% (pourcentage molaire).

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un monomère éthylène ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier comprendra que la présente invention est de préférence mise en œuvre avec des élastomères diéniques essentiellement insaturés, en particulier du type (a) ou (b) ci-dessus.

Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à une charge inorganique renforçante telle que silice, on peut citer par exemple des groupes fonctionnels silanol ou polysiloxane ayant une extrémité silanol (tels que décrits par exemple dans FR2740778 ou US6013718, et WO2008/141702), des groupes alkoxysilane (tels que décrits par exemple dans FR2765882 ou US5977238), des groupes carboxyliques (tels que décrits par exemple dans WO01/92402 ou US6815473, WO2004/096865 ou US2006/0089445) ou encore des groupes polyéthers (tels que décrits par exemple dans EP1127909 ou US6503973, WO2009/000750 et WO2009/000752).

On peut aussi citer comme élastomères diéniques fonctionnels ceux préparés par l'utilisation d'un amorceur fonctionnel, notamment ceux portant une fonction amine ou étain (voir par exemple WO2010/072761).

Comme autres exemples d'élastomères diéniques fonctionnalisés, on peut citer également des élastomères (tels que BR, NR ou IR) du type époxydés.

Par « majoritairement » ou « à titre majoritaire », on entend au sens de la présente invention, que le composé est majoritaire parmi les composés du même type dans la composition, c'est-à-dire que c'est celui qui représente la plus grande quantité en masse parmi les composés du même type. En d'autres termes, la masse de ce composé représente au moins 51 % de la masse totale des composés du même type dans la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse totale des élastomères, autrement dit la masse de cet élastomère représente au moins 51 % de la masse totale des élastomères. De la même manière, une charge dite majoritaire est celle représentant la plus grande masse parmi les charges de la composition. En d'autres termes, la masse de cette charge représente au moins 51% de la masse totale des charges dans la composition.

Par « minoritaire », on entend un composé qui ne représente pas la fraction massique la plus grande parmi les composés du même type.

Toutes les valeurs de température de transition vitreuse « Tg » sont mesurées de manière connue par DSC (Differential Scanning Calorimetry) selon la norme ASTM D3418 (1999).

Par « exempte de composé X », on entend que le composé X n'est pas détectable par des mesures connues par l'homme du métier ou que ce composé X est présent à des quantités faibles qui représentent des impuretés (c'est-à-dire de l'ordre du ppm (parties en poids par million)).

Dans le cadre de l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les composés (tels que les monomères, les polymères), les réactifs et autres composants mentionnés dans la description, tel que les plastifiants, les charges, etc.

### Copolymère à base de styrène et de butadiène

La matrice élastomérique de la composition de caoutchouc du pneumatique conforme à l'invention comprend à titre majoritaire un copolymère à base de styrène et de butadiène ayant une température de transition vitreuse Tg strictement supérieure à -65°C et inférieure ou égale à -30°C. En d'autres termes, la masse du copolymère à base de styrène et de butadiène ayant une température de transition Tg vitreuse strictement supérieure à - 65°C et inférieure ou égale à -30°C représente au moins 51 % de la masse totale de la matrice élastomérique.

Par copolymère à base de styrène et de butadiène, on entend ici un copolymère d'au moins un monomère styrène et d'au moins un monomère butadiène (et bien entendu également tout mélange de tels copolymères) ayant une température de transition vitreuse Tg strictement supérieure à -65°C et inférieure ou égale à -30°C; en d'autres termes, ledit copolymère à base de styrène et de butadiène comporte par définition au moins des unités styrène (issues du monomère styrène) et des unités butadiène (issues du monomère butadiène) et a une température de transition vitreuse Tg strictement supérieure à -65°C et inférieure ou égale à -30°C.

A titre de monomères butadiènes conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène.

A titre de monomères styrènes conviennent notamment le styrène, les méthylstyrènes, le para-tertiobutylstyrène, les méthoxystyrènes, les chlorostyrènes.

Parmi les copolymères à base de styrène et de butadiène, on peut citer notamment ceux ayant une teneur en styrène comprise entre 5% et 60% en poids, et plus particulièrement entre 20% et 50% en poids par rapport au poids du copolymère, une teneur molaire (% molaire) en liaisons -1,2 de la partie butadiénique comprise entre 4% et 75%, une teneur molaire (% molaire) en liaisons trans-1,4 de la partie butadiénique comprise entre 10% et 80%. La teneur en styrène en poids, la teneur molaire des liaisons -1,2 de la partie butadiénique et la teneur molaire en liaison trans-1,4 sont mesurées par des techniques bien connues de l'homme du métier.

Dans un mode de réalisation, le copolymère à base de styrène et de butadiène est constitué de monomères de styrène et de monomères de butadiène, c'est-à-dire que la somme des pourcentages molaires de monomères styrène et de monomères butadiène est égale à 100%.

Dans la suite de la description, par simplification, on utilise l'expression « copolymère à base de styrène et de butadiène » pour désigner un copolymère comprenant des monomères de styrène et des monomères de butadiène ou un copolymère constitué de monomères de styrène et de monomères de butadiène.

Le copolymère à base de styrène et de butadiène peut avoir toute microstructure qui est fonction des conditions de polymérisation utilisées.

De préférence, le copolymère à base de styrène et de butadiène peut être obtenu par polymérisation en solution. On notera avantageusement que la composition de caoutchouc du pneumatique conforme à l'invention peut ne pas comprendre ou peut comprendre en une quantité très faible un copolymère à base de styrène et de butadiène étendu; autrement dit le taux de copolymère à base de styrène et de butadiène étendu, si ce type de copolymère est présent, peut être inférieur ou égal à 2 pce, de manière préférée à ce taux peut correspondre à une impureté. Plus particulièrement, la composition de caoutchouc du pneumatique conforme à l'invention peut être exempte de copolymère à base de styrène et de butadiène étendu. Par copolymère étendu, on entend un copolymère étendu et stabilisé avec une huile, notamment de type paraffinique, naphténique ou aromatique.

De préférence, la température de transition vitreuse Tg du copolymère à base de styrène et de butadiène peut aller de -60°C à -40°C. L'homme du métier sait comment modifier la microstructure d'un copolymère à base de styrène et de butadiène pour ajuster sa Tg, notamment en jouant sur les teneurs en styrène, en liaisons -1,2 de la partie butadiénique ou encore en liaisons trans-1,4 de la partie butadiénique.

Préférentiellement, le taux du copolymère à base de styrène et de butadiène, dans la composition de caoutchouc du pneumatique conforme à l'invention peut aller de 51 à 100 pce, de préférence de 60 à 100 pce, de manière encore plus préférée 60 à 85 pce.

Le copolymère à base de styrène et de butadiène peut avantageusement être utilisé en coupage (mélange) avec un ou plusieurs autre(s) élastomère(s) diénique(s) différent(s) dudit copolymère à base de styrène et de butadiène. Dans le cas d'un coupage, il est notamment entendu que la somme des différents élastomères utilisés est égale à 100 pce.

Ainsi, dans un mode de réalisation du pneumatique conforme à l'invention, au copolymère à base de styrène et de butadiène ci-dessus, peut être associé éventuellement au moins un deuxième élastomère diénique, différent dudit copolymère à base de styrène et de butadiène ; c'est-à-dire que le deuxième élastomère diénique ne comportant pas des unités issues de styrène et de butadiène. Lorsqu'il est présent, le deuxième élastomère diénique peut être choisi dans le groupe formé par les polybutadiènes (BR), le caoutchouc naturel (NR), les isoprènes de synthèse, (IR), les copolymères butadiènes autre que les copolymères butadiène-styrène, les copolymères d'isoprènes et les mélanges de ces polymères et copolymères. De préférence, ledit deuxième élastomère diénique peut être un polybutadiène (BR). Lorsqu'il est présent, le taux du deuxième élastomère diénique peut être d'au plus égal à 49 pce, préférentiellement d'au plus égal à 35 pce. De préférence, le taux du deuxième élastomère diénique peut aller de 5 à 49 pce (pour rappel, pce signifiant parties en poids pour cent parties d'élastomère, c'est-à-dire du total des élastomères présents dans la bande de roulement), de préférence de 15 à 35 pce.

Dans un autre mode de réalisation du pneumatique conforme à l'invention, au copolymère à base de styrène et de butadiène peut être associé éventuellement au moins un deuxième élastomère diénique, différent dudit copolymère à base de styrène et de butadiène (c'est-à-dire ne comportant pas des unités issues de styrène et de butadiène) et un troisième élastomère différent dudit copolymère à base de styrène et de butadiène et du deuxième élastomère diénique. De préférence, le troisième élastomère diénique peut être un élastomère isoprénique. Préférentiellement, le deuxième élastomère diénique peut être choisi dans le groupe formé par les polybutadiènes (BR) et les copolymères butadiènes autre que les copolymères butadiène-styrène ; et le troisième élastomère diénique peut être choisi dans le groupe formé par le caoutchouc naturel (NR), les isoprènes de synthèse, (IR), les copolymères d'isoprènes et les mélanges de ces polymères et copolymères. De préférence, le deuxième élastomère diénique peut être le butadiène et le troisième élastomère diénique peut être du caoutchouc naturel ou un isoprène de synthèse. Préférentiellement, le taux du deuxième élastomère peut aller de 0,5 à 35 pce, et le taux du troisième élastomère peut aller de 0,5 à 35 pce ; de manière plus préférée, le taux du deuxième élastomère peut aller de 9 à 31 pce et le taux du troisième élastomère peut aller de 4 à 24 pce.

Parmi les polybutadiènes ou copolymères de butadiène utilisés dans les coupages ci-dessus, conviennent en particulier les polybutadiènes ayant une teneur (% molaire) en unités -1,2 comprise entre 4% et 80% ou ceux ayant une teneur (% molaire) en cis-1,4 supérieure à 80% plus particulièrement supérieure à 90%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Parmi les élastomères isopréniques (i.e., homopolymères ou copolymères d'isoprène) utilisés dans les coupages ci-dessus, on citera en particulier NR, IR, les copolymères d'isoprène tels que copolymères d'isobutène-isoprène (caoutchouc butyle ou IIR), d'isoprène-styrène (SIR), d'isoprène-butadiène (BIR) ou d'isoprène-butadiène-styrène (SBIR). Parmi les polyisoprènes de synthèse, peuvent être utilisés de préférence des polyisoprènes ayant un taux (% molaire) de liaisons cis-1,4 supérieur à 90%, plus préférentiellement encore supérieur à 98%.

Aux élastomères diéniques précédemment décrits peuvent être également associés, en quantité minoritaire, des élastomères synthétiques autres que diéniques, voire des polymères autres que des élastomères, par exemple des polymères thermoplastiques.

### Agent de modification du copolymère à base de styrène et de butadiène

Comme mentionné précédemment, la composition de caoutchouc utilisée dans les pneumatiques de l'invention comporte au moins un agent de modification dudit copolymère à base de styrène et de butadiène, éventuellement déjà greffé sur ledit copolymère, ledit agent de modification étant un composé 1,3-dipolaire de formule générale (I) :

A-E-D (I)

o le symbole D représente un groupe fonctionnel comprenant au moins un atome d'azote et étant susceptible de se lier audit copolymère par une cycloaddition de type [3+2] sur une double liaison carbone-carbone de la chaîne dudit copolymère,
o le symbole E représente un groupe espaceur divalent reliant le groupe fonctionnel D au groupe fonctionnel A,
o A représente un groupe fonctionnel choisi parmi les alkyles en C₁-C₂₀, les alkylaryles en C₇-C₁₈, les arylalkyles en C₇-C₁₈, les hétérocycles azotés de 5 à 6 atomes éventuellement substitués, les hétérocycles soufrés de 5 à 6 atomes éventuellement substitués, les groupes esters, les groupes phosphates, les groupes dialkylaminos et les groupes associatifs comprenant au moins un atome d'azote.

Par « agent de modification » on entend au sens de la présente invention un composé chimique électriquement neutre portant au moins un dipôle, c'est-à-dire une charge positive et une charge négative dans l'une de leurs principales formules canoniques, et capable de former une cycloaddition dipolaire [1,3] sur une liaison carbone-carbone insaturée. Autrement dit, l'agent de modification est un composé 1,3-dipolaire. L'homme du métier peut se référer à la définition donnée pour ce composé par l'IUPAC (International Union of Pure And Applied Chemistry) dans le glossaire des noms de classes de composés organiques et des intermédiaires de réactivité basée sur la structure (IUPAC Recommendations 1995, PAC, 1995, 67, 1307).

Le groupe fonctionnel D comprend au moins un atome d'azote et est susceptible de se lier à la chaîne du copolymère à base de styrène et de butadiène par une cycloaddition de type [3+2] sur une double liaison carbone-carbone de la chaîne dudit copolymère.

De préférence, le groupe fonctionnel D comprend une fonction oxyde de nitrile, une fonction nitrone ou une fonction nitrile imine.

Par oxyde de nitrile, on entend au sens de la présente invention un dipôle répondant à la formule -C≡N→O, y compris ses formes mésomères.

Par imine de nitrile, on entend au sens de la présente invention un dipôle répondant à la formule -C≡N→N, y compris ses formes mésomères.

Par nitrone, on entend au sens de la présente invention un dipôle répondant à la formule -C=N(→O)-, y compris ses formes mésomères.

De préférence, le groupe fonctionnel D comprend une fonction oxyde de nitrile.

De préférence, le groupe fonctionnel D comprend une fonction oxyde de nitrile et est un groupe de formule (II) : 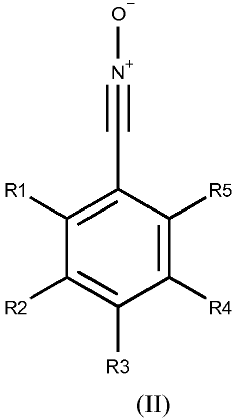 dans laquelle :
- R1, R2, R3, R4, R5, identiques ou différents, représentent un atome d'hydrogène, un atome d'halogène, un alkyle en C₁-C₅, un alcoxyle en C₁-C₅ ou une liaison covalente permettant le rattachement au groupe espaceur E;
- à la condition qu'au moins un des R1, R2, R3, R4, R5 représente ladite liaison covalente.

Parmi les groupes esters, peuvent convenir notamment ceux répondant à la formule C(O)-O- R6 avec R6 représentant un groupe hydrocarboné en C₁-C₂₀, de préférence en groupe hydrocarboné C₁-C₁₂, de manière plus préférée représentant en groupe hydrocarboné C₁-C₆. De préférence, R6 est un alkyle en C₁-C₆, de manière plus préférée R6 est un méthyle ou un éthyle.

Parmi les groupes phosphates, peuvent convenir notamment ceux répondant à la formule-O-P(O)(OR7)(OR8) avec R7 et R8, identiques ou différents, représentant un atome d'hydrogène, un alkyle, un aryle ou un alkylaryle. De préférence, R7 et R8 sont identiques et sont un alkyle en C₁-C₁₂, de préférence un alkyle en C₁-C₆, de préférence un méthyle ou un éthyle.

Parmi les groupes dialkylamino, peuvent notamment convenir ceux répondant à la formule -NR9R10 dans lequel R9 et R10, identiques ou différents, représentent un alkyle en C₁-C₆. On peut citer, par exemple, un groupe N,N-diméthylamino, un groupe N,N-diéthylamino, un groupe N-éthyl,N-propylamino. De préférence, R9 et R10 sont identiques et sont un méthyle.

Par « groupe associatif comprenant au moins un atome d'azote», on entend des groupes susceptibles de s'associer les uns aux autres par des liaisons hydrogène, ioniques et/ou hydrophobes et qui comprend un ou plusieurs atomes d'azote. Il s'agit notamment de groupes susceptibles de s'associer par des liaisons hydrogène.

Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Les groupes associatifs selon l'invention sont également susceptibles de s'associer par des liaisons hydrogène, ioniques et/ou hydrophobes à des fonctions présentes sur des charges présentes dans la composition.

Le groupe espaceur E est un groupe divalent qui permet de relier au moins un groupe fonctionnel D et/ou au moins un groupe fonctionnel A, notamment lorsque le groupe fonctionnel A est un groupe associatif, et ainsi peut être de tout type connu en soi. Le groupe espaceur E ne doit cependant pas, ou peu, interférer avec les groupes fonctionnels D et A, notamment lorsque le groupe fonctionnel A est un groupe associatif, de l'agent de modification.

Ledit groupe espaceur E est donc considéré comme un groupe divalent inerte vis-à-vis du groupe fonctionnel D. Le groupe espaceur E est de préférence une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupes fonctionnels D.

Selon un mode de réalisation préféré, le groupe espaceur E est une chaîne alkyle linéaire ou ramifiée en C₁-C₂₄, de préférence C₁-C₁₀ et plus préférentiellement une chaîne alkyle linéaire en C₁-C₆, éventuellement comprenant un ou plusieurs hétéroatomes choisis parmi les atomes d'azote, de soufre et d'oxygène.

Les composés selon l'invention comportant un groupe fonctionnel D, un groupe espaceur E et un groupe fonctionnel A, notamment un groupe associatif, peuvent par exemple être représentés par la formule (IIIa) suivante :

A-E-D (IIIa)

Les composés selon l'invention comportant un groupe fonctionnel D, un groupe espaceur E et deux groupes fonctionnels A, notamment deux groupes associatifs, peuvent par exemple être représentés par la formule (IIIb) suivante :

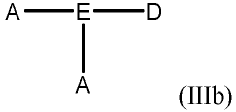

De manière similaire, les composés selon l'invention comportant deux groupes fonctionnels D, un groupe espaceur E et un groupe fonctionnel A, notamment un groupe associatif, peuvent par exemple être représentés par la formule (IIIc) suivante :

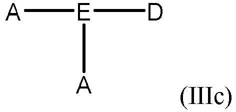

Selon le même principe, les composés selon l'invention comportant deux groupes fonctionnels D, un groupe espaceur E et deux groupes fonctionnels A, notamment deux groupes associatifs, peuvent par exemple être représentés par la formule (IIId) suivante :

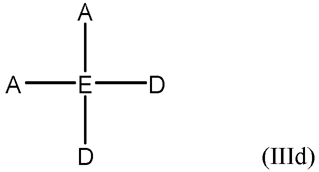

De préférence, le groupe fonctionnel A est un groupe associatif comprenant au moins un atome d'azote et est choisi parmi les formules suivantes (IV) à (VIII): 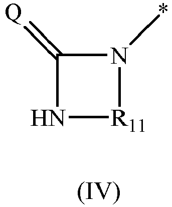 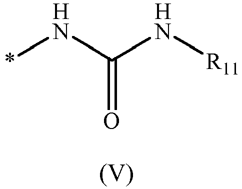 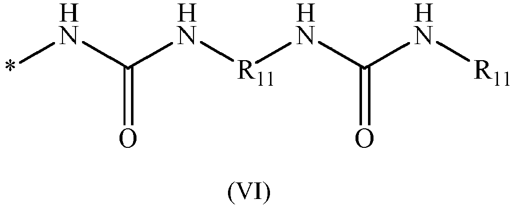 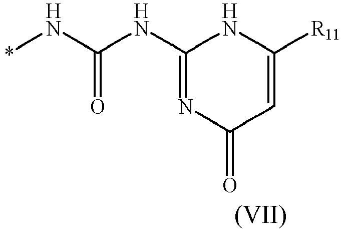 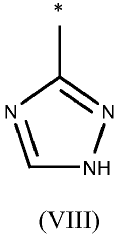 dans lesquelles:
- R11 représente un groupe hydrocarboné pouvant éventuellement contenir des hétéroatomes,
- Q représente un atome d'oxygène ou de soufre ou NH, de préférence un atome d'oxygène, et
- le symbole ^{∗} représente le rattachement au groupe espaceur E.

De préférence, l'agent de modification à greffer ou greffé sur le copolymère à base de styrène et de butadiène peut être choisi par les composés (IX) à (XVIII) suivantes:

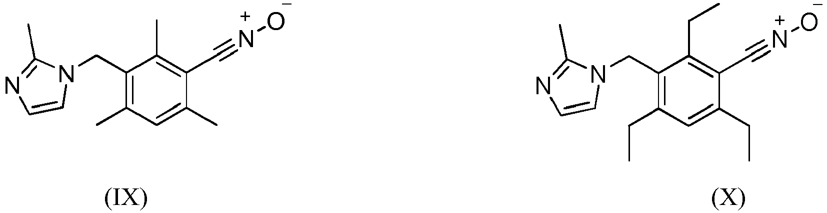

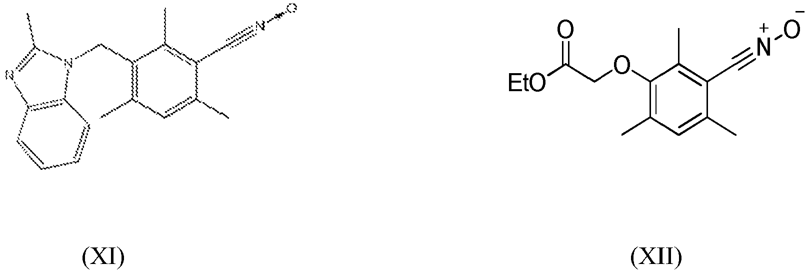

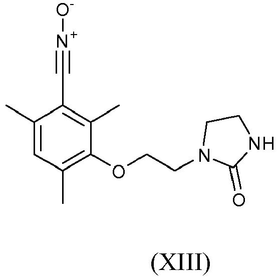

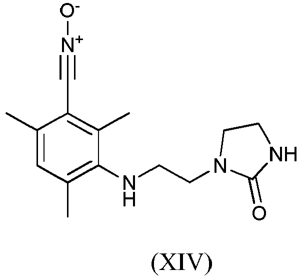

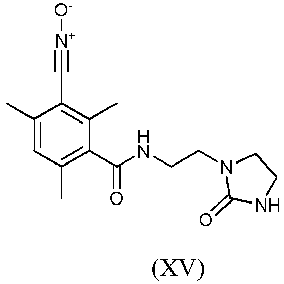

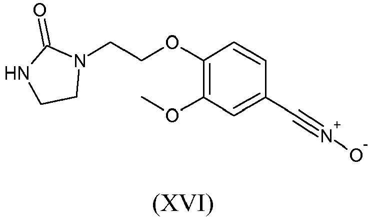

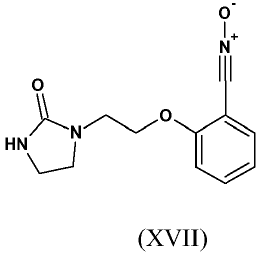

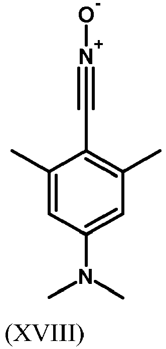

De manière encore plus préférée l'agent de modification est choisi parmi les composés de formules ci-dessus (XIII), (XIV), (XV) et (XVII) et leurs formes mésomères.

Les agents de modification de formule générale (I) utiles pour l'invention, s'ils ne sont pas disponibles dans le commerce, peuvent être préparés par tout moyen connu de l'homme de l'art. Par exemple, on peut utiliser un procédé de synthèse décrit dans le document WO 2012/007441.

On entend dans la suite du texte par "taux d'agent de modification" présent dans une composition de caoutchouc, exprimé en pourcentage molaire, le nombre de molécules dudit agent de modification présentes dans la composition pour cent motifs du copolymère à base de styrène et de butadiène de la composition, qu'il s'agisse indifféremment de motifs diéniques ou non diéniques.

Par exemple, si le taux d'agent de modification sur le copolymère à base de styrène et de butadiène est de 0,20% molaire, cela signifie qu'il y aura 0,20 motif issu d'agent de modification pour 100 motifs styréniques et butadiéniques dudit copolymère.

De préférence, le taux d'agent de modification varie de 0,01 à 50% molaire, de préférence de 0,01 à 5% molaire.

Le greffage du copolymère à base de styrène et de butadiène ayant une température de transition vitreuse Tg strictement supérieure à -65°C et inférieure ou égale à -30°C se fait par réaction dudit copolymère avec le ou les groupes fonctionnels D portés par l'agent de modification tel que défini ci-dessus. Lors de cette réaction, ce ou ces groupes fonctionnels D forment des liaisons covalentes avec la chaîne de l'élastomère.

Plus précisément, le greffage dudit agent de modification est effectué par cycloaddition [3+2] du ou des groupes fonctionnels D de l'agent de modification tel que défini ci-dessus et une ou plusieurs doubles liaisons carbone-carbone de la chaîne du copolymère à base de styrène et de butadiène. Le mécanisme de la cycloaddition est bien connu par l'homme du métier et peut être illustré par les schémas réactionnels génériques suivants :
- Cycloaddition d'un oxyde de nitrile sur une insaturation ou double liaison du polymère (ici une unité isoprène) 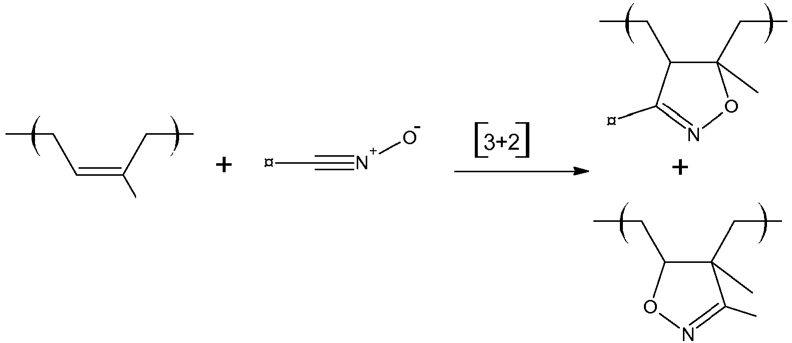
- Cycloaddition d'une nitrone sur une insaturation ou double liaison du polymère (ici une unité isoprène) 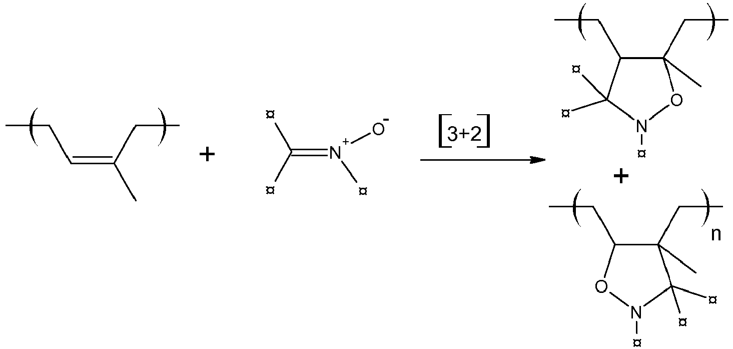
- Cycloaddition d'un nitrile imine sur une insaturation ou double liaison du polymère (ici une unité isoprène)

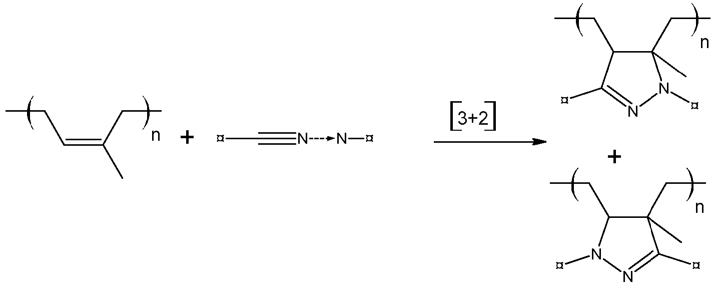

Le greffage de l'agent de modification de formule (I) tel que défini ci-dessus (ou des agents de modification préférés) peut être réalisé en masse, par exemple dans un mélangeur interne ou un mélangeur externe tel qu'un mélangeur à cylindres. Le greffage est alors mis en œuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le procédé de greffage peut également être effectué en solution en continu ou en discontinu. Le copolymère ainsi modifié peut être séparé de sa solution par tout type de moyen connu par l'homme de l'art et en particulier par une opération de stripping à la vapeur d'eau.

### Charge renforçante

La composition de caoutchouc utilisée dans les pneumatiques de l'invention comporte au moins une charge renforçante comprenant à titre majoritaire de la silice, c'est-à-dire que la masse de la silice représente au moins 51% de la masse totale des constituants de la charge renforçante. De préférence, la masse silice représente plus de 60 %, de préférence plus de 70% de la masse total de la charge renforçante.

Dans le présent exposé, la surface spécifique BET est déterminée de manière connue par adsorption de gaz à l'aide de la méthode de Brunauer-Emmett-Teller décrite dans « The Journal of the American Chemical Society » Vol. 60, page 309, février 1938, plus précisément selon la norme française NF ISO 9277 de décembre 1996 (méthode volumétrique (5 point- gaz : azote - dégazage : 1heure à 160°C - domaine de pression relative p/po : 0.05 à 0.17). La surface spécifique CTAB est la surface externe déterminée selon la norme française NF T45-007 de novembre 1987 (méthode B).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyles (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales de type siliceuses, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO03/016837.

Bien entendu, on entend également par charge renforçante inorganique des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganiques non siliceuses, on peut citer les charges minérales du type alumineuses, en particulier de l'alumine (Al₂O₃) ou des (oxydes)hydroxydes d'aluminium, ou encore des oxydes de titane renforçants, par exemple décrits dans US6610261 et US6747087. Les charges inorganiques non siliceuses, lorsque présentes, sont minoritaires dans la charge renforçante.

L'état physique sous lequel se présente la charge renforçante inorganique est indifférent, que ce soit sous forme de poudre, de microperles, de granulés, ou encore de billes.

Selon un mode de réalisation, le taux de la charge renforçante, dans la composition de caoutchouc du pneumatique conforme à l'invention peut aller de 55 pce à 200 pce, de préférence de 55 à 150 pce, de manière plus préférée va de 55 à 80 pce. Ces plages préférentielles s'appliquent à l'un quelconque des modes de réalisation de l'invention.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO96/37547, WO99/28380.

### Noir de carbone :

Selon un mode de réalisation du pneumatique conforme à l'invention, la composition de caoutchouc peut comprendre en outre du noir de carbone.

Le noir de carbone, lorsqu'il est présent, peut être utilisé de préférence à un taux inférieur ou égal à 10 pce, de préférence inférieur ou égal à 5 pce. De préférence, le taux du noir de carbone peut aller de 0,5 à 4 pce. Ces plages préférentielles s'appliquent à l'un quelconque des modes de réalisation de l'invention.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

### Les agents de couplage

Pour coupler la charge inorganique renforçante à la matrice élastomérique (c'est-à-dire au copolymère à base de styrène et de butadiène modifié par l'agent de modification et aux élastomères diéniques lorsqu'ils sont présents), on peut utiliser de manière bien connue un agent de couplage (ou agent de liaison) au moins bifonctionnel destiné à assurer une connexion suffisante, de nature chimique et/ou physique, entre la charge inorganique (surface de ses particules) et la matrice élastomérique. On peut utiliser en particulier des organosilanes ou des polyorganosiloxanes au moins bifonctionnels.

On peut utiliser notamment des silanes polysulfurés, dits "symétriques" ou "asymétriques" selon leur structure particulière, tels que décrits par exemple dans les demandes WO03/002648 (ou US2005/016651) et WO03/002649 (ou US2005/016650).

Conviennent en particulier, sans que la définition ci-après soit limitative, des silanes polysulfurés répondant à la formule générale (XVIII) suivante:

Z - B - Sₓ - B - Z (XVIII)

dans laquelle:
- x est un entier de 2 à 8 (de préférence de 2 à 5) ;
- les symboles B, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 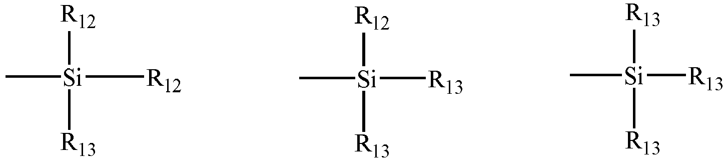 dans lesquelles:
   - les radicaux R₁₂, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R₁₃, substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₅ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (XVIII) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₃O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO02/083782 précitée (ou US7217751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule (XVIII) ci-dessus) tels que décrits par exemple dans les demandes de brevet WO02/30939 (ou US6774255), WO02/31041 (ou US2004/051210), et WO2007/061550, ou encore des silanes ou POS porteurs de groupements fonctionnels azo-dicarbonyle, tels que décrits par exemple dans les demandes de brevet WO2006/125532, WO2006/125533, WO2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US6849754, WO99/09036, WO2006/023815, WO2007/098080, WO2010/072685 et WO2008/055986.

Bien entendu pourraient être également utilisés des mélanges des agents de couplage précédemment décrits, comme décrit notamment dans la demande WO2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition. Ces plages préférentielles s'appliquent à l'un quelconque des modes de réalisation de l'invention.

### Les agents de recouvrement :

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### Système plastifiant

La composition de caoutchouc des pneumatiques conformes à l'invention comprendre de 2 à 17 pce d'un système plastifiant, ce système comprenant de 2 à 15 pce d'au moins une résine plastifiante ayant une température de transition vitreuse Tg supérieure ou égale à 20°C, et de préférence de 0 à 2 pce d'un plastifiant liquide à température ambiante.

De manière connue de l'homme du métier, la dénomination "résine" est réservée dans la présente demande, par définition, à un composé qui est solide à température ambiante (23°C), par opposition à un plastifiant liquide à température ambiante tel qu'une huile.

Les résines plastifiantes sont des polymères bien connus de l'homme du métier. Ce sont des résines hydrocarbonées essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions d'élastomère(s) diénique(s) auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*)*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante peut présenter au moins une quelconque des caractéristiques suivantes :
- une Tg supérieure ou égale à 20°C (en particulier compris entre 30°C et 100°C), plus préférentiellement supérieure ou égale à 30°C (en particulier entre 30 C et 95°C);
- un point de ramollissement supérieur ou égal à 40°C (en particulier compris entre 40°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

Plus préférentiellement, la résine plastifiante peut présenter l'ensemble des caractéristiques préférentielles ci-dessus.

A titres d'exemples de telles résines plastifiante, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les mélange de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Parmi les résines de copolymères ci-dessus, on peut citer plus particulièrement celles choisies dans le groupe constitué par les résines de copolymère CPD/ vinylaromatique, les résines de copolymère DCPD/ vinylaromatique, les résines de copolymère CPD/ terpène, les résines de copolymère DCPD/ terpène, les résines de copolymère terpène phénol, les résines de copolymère CPD/ coupe C5, les résines de copolymère DCPD/ coupe C5, les résines de copolymère CPD/ coupe C9, les résines de copolymère DCPD/ coupe C9, les mélange de résines de coupe C5 et de coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère CPD, les résines d'homopolymère DCPD, les résines de copolymère CPD/ styrène, les résines de copolymère DCPD/ styrène, les résines de polylimonène, les résines de copolymère limonène/ styrène, les résines de copolymère limonène/CPD, les résines de copolymère limonène/ DCPD,les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, ou encore par la société Struktol sous dénomination "40 MS" ou "40 NS" (mélanges de résines aromatiques et/ou aliphatiques).

Selon un mode de réalisation de l'invention, le système plastifiant peut comporter d'autre part un plastifiant liquide à température ambiante (à 23°C) présent selon un taux inférieur ou égale à 2 pce.

Toute huile d'extension, qu'elle soit de nature aromatique ou non aromatique, tout plastifiant liquide à température ambiante connu pour ses propriétés plastifiantes vis-à-vis d'élastomères diéniques, peut être utilisable en plus de la résine plastifiante. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme plastifiants liquides à température ambiante, on peut notamment citer les polymères diéniques liquides, les huiles polyoléfiniques, les huiles naphténiques, les huiles paraffiniques, les huiles DAE (*Distillate Aromatic Extracts*)*,* les huiles MES (*Medium Extracted Solvates*)*,* les huiles TDAE (*Treated Distillate Aromatic Extracts*), les huiles RAE (*Residual Aromatic Extract oils*)*,* les huiles TRAE (*Treated Residual Aromatic Extract*)*,* les huiles SRAE (*Safety Residual Aromatic Extract oils*)*,* les huiles minérales, les huiles végétales, les plastifiants éthers, les plastifiants esters, les plastifiants phosphates, les plastifiants sulfonates et les mélanges de ces composés. Selon un mode de réalisation plus préférentiel, le plastifiant liquide à température ambiante est choisi dans le groupe constitué par les huiles MES, les huiles TDAE, les huiles naphténiques, les huiles végétales et les mélanges de ces huiles.

Dans un mode de réalisation, la composition de caoutchouc de pneumatiques conformes à l'invention peut comprendre de 2 à 12 pce, d'un système plastifiant comprenant de 2 à 10 pce, d'au moins une résine plastifiante ayant une température de transition vitreuse Tg supérieure ou égale à 20°C, et de préférence de 0 à 2 pce d'un plastifiant liquide à température ambiante (23°C). Les caractéristiques préférée de la résine plastifiante telle que décrite ci-dessus et les caractéristiques préférées du plastifiant liquide à température ambiante, lorsqu'il est présent, s'appliquent à ce mode de réalisation.

Dans un autre mode de réalisation, la composition de caoutchouc de pneumatiques conformes à l'invention peut être exempte d'agent plastifiant liquide à température ambiante (23°C). Dans ce cas, la composition de caoutchouc de pneumatiques conformes à l'invention peut comprendre de 2 à 10 pce, d'un système plastifiant constitué de 2 à 10 pce, d'au moins une résine plastifiante ayant une température de transition vitreuse Tg supérieure ou égale à 20°C.

### Additifs divers

Les compositions de caoutchouc des pneumatiques conformes à l'invention peuvent comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des agents de protection tels que cires anti-ozone comme par exemple de la paraffine, anti-ozonants chimiques, anti-oxydants, des agents anti-fatigue, des pigments.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris entre 0,5 et 12 pce, en particulier entre 1 et 10 pce. Ces plages préférentielles s'appliquent à l'un quelconque des modes de réalisation de l'invention. L'accélérateur primaire de vulcanisation est utilisé à un taux préférentiel compris entre 0,5 et 10 pce, plus préférentiellement compris entre 0,5 et 5,0 pce. Ces plages préférentielles s'appliquent à l'un quelconque des modes de réalisation de l'invention.

Le taux de soufre utilisé dans la composition de caoutchouc de la bande de roulement conforme à l'invention est le plus souvent compris entre 0,5 et 3,0 pce, celui de l'accélérateur primaire entre 0,5 et 5,0 pce. Ces plages préférentielles s'appliquent à l'un quelconque des modes de réalisation de l'invention.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Fabrication de la composition et du pneumatique

La composition de caoutchouc peut être fabriquée dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation.

Selon un premier mode de réalisation de l'invention, le copolymère à base de styrène et de butadiène tel que défini ci-dessus a été greffé par l'agent de modification de formule (I) tel que défini ci-dessus (ou les agents de modifications préférés tels que définis ci-dessus), préalablement à la fabrication de la composition de caoutchouc. Ainsi, dans ce cas, c'est le copolymère à base de styrène et de butadiène ayant une température de transition vitreuse Tg strictement supérieure à -65°C et inférieure ou égale à -30°C greffé qui est introduit au cours de la première phase dite non-productive. Ainsi selon ce premier mode de réalisation du procédé, celui-ci comprend les étapes suivantes:
- modifier ledit copolymère à base de styrène et de butadiène ci-dessus en post-polymérisation ou en solution ou en masse par greffage d'un agent de modification de formule (I) tel que défini ci-dessus (ou les agents de modifications préférés tels que définis ci-dessus),
- incorporer audit copolymère à base de styrène et de butadiène ainsi greffé par ledit agent de modification (ou les agents de modifications préférés tels que définis ci-dessus), la charge renforçante, le système plastifiant, et tous autres les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.

- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

Selon un second mode de réalisation de l'invention, le greffage copolymère à base de styrène et de butadiène ayant une température de transition vitreuse Tg strictement supérieure à -65°C et inférieure ou égale à -30°C par l'agent de modification de formule (I) (ou les agents de modifications préférés tels que définis ci-dessus) est effectué concomitamment à la fabrication de la composition de caoutchouc. Dans ce cas, tant ledit copolymère à base de styrène et de butadiène non encore greffé que l'agent de modification de formule (I) (ou les agents de modifications préférés tels que définis ci-dessus) sont introduits au cours de la première phase dite non-productive. De manière préférentielle, la charge renforçante est alors ajoutée subséquemment au cours de cette même phase non-productive afin de prévenir toute réaction parasite avec l'agent de modification de formule (I) (ou avec les agents de modifications préférés tels que définis ci-dessus).

Ainsi, selon ce deuxième mode de réalisation du procédé, celui-ci comprend les étapes suivantes:
- incorporer au copolymère à base de styrène et de butadiène ayant une température de transition vitreuse Tg strictement supérieure à -65°C et inférieure ou égale à -30°C, un agent de modification de formule (I) (ou les agents de modifications préférés tels que définis ci-dessus) tel que décrit plus haut, une température et pendant une durée telle que le rendement de greffage soit de préférence supérieur à 60%, plus préférentiellement supérieur à 80%, et, de préférence subséquemment, la charge renforçante, le système plastifiant ainsi que tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

La composition finale ainsi obtenue peut être ensuite calandrée, par exemple sous la forme d'une feuille ou d'une plaque, notamment pour une caractérisation au laboratoire, ou encore extrudée, pour former par exemple un profilé de caoutchouc utilisé comme bande de roulement d'un pneumatique pour un véhicule portant de lourdes charges, notamment pour un véhicule poids-lourd ou pour un véhicule de génie civil.

Le pneumatique conforme à l'invention est de préférence un pneumatique destiné à équiper un véhicule portant de lourdes de charges, tels que les véhicules poids-lourds, les bus, les véhicules de génie civil. De manière préférentielle, le pneumatique conforme à l'invention est un pneumatique destiné à équiper un véhicule poids-lourd.

Le pneumatique peut être fabriqué selon tout procédé bien connu de l'homme du métier.

Les caractéristiques précitées de la présente invention, ainsi que d'autres, seront mieux comprises à la lecture de la description suivante de plusieurs exemples de réalisation de l'invention, donnés à titre illustratif et non limitatif.

### II - EXEMPLES DE REALISATION DE L'INVENTION

### II-1. Mesures et tests utilisés :

### Propriétés dynamiques

Les propriétés dynamiques et notamment tan(δ)ₘₐₓ, représentative de l'hystérèse, sont mesurées sur un viscoanalyseur (Metravib VA4000), selon la norme ASTM D 5992-96. On enregistre la réponse d'un échantillon de la composition vulcanisée (éprouvettes cylindriques de 4 mm d'épaisseur et de 400 mm² de section), soumis à une sollicitation sinusoïdale en cisaillement simple alterné, à la fréquence de 10Hz.

Pour la mesure de le module G^{∗} à 50% de déformation noté G^{∗}_{50%} et de tan(δ)ₘₐₓ, on effectue un balayage en amplitude de déformation de 0,1% à 100% crête-crête (cycle aller), puis de 100% à 0,1% crête-crête (cycle retour) à une température de 60°C. On effectue. Les résultats exploités sont le module complexe de cisaillement dynamique (G^{∗}) et le facteur de perte tan(δ). Pour le cycle aller, on indique la valeur maximale de tan(δ) observée (tan(δ)ₘₐₓ) entre les valeurs de 0,1% à 100% de déformation.

Pour la mesure de tan(δ)_{-20°C}, on effectue un balayage en température sous une contrainte de 0,7MPa, on enregistre la valeur de tan(δ) observée à -20°C.

### II-2. Préparation des compositions de caoutchouc :

On procède pour les essais qui suivent de la manière suivante: on introduit dans un mélangeur interne Polylab de 85cm³, rempli à 70% et dont la température initiale de cuve est d'environ 110°C, le ou les élastomères diéniques non greffés. Pour les mélanges concernant l'invention, l'agent de modification de formule générale (I) est introduit en même temps que l'élastomère diénique et est conduit un travail thermomécanique de 1 min 30 à 25°C, en mélangeant le tout (phase productive) pendant environ 5 à 6 min.

Ensuite, pour toutes les compositions (témoins et de l'invention) la ou les charges renforçantes éventuelles, l'agent de couplage éventuel puis, après une à deux minutes de malaxage, les divers autres ingrédients à l'exception du système de vulcanisation, sont introduits dans le mélangeur. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### II-3. Essai A :

Cet essai a pour but de mettre en évidence l'amélioration du compromis de performances adhérence sur sol mouillé/résistance au roulement/résistance à l'usure d'une composition conforme à l'invention par rapport à des compotions non conformes à l'invention.

Pour cela, on compare 4 compositions qui différent les unes des autres essentiellement par les caractéristiques techniques qui suivent :
- la composition T1 est une composition non conforme à l'invention comprenant un SBR de Tg=-65°C sans agent de modification de formule générale (I) ;
- la composition T2 est une composition non conforme à l'invention comprenant un SBR de Tg=-48°C sans agent de modification de formule générale (I);
- la composition T3 est une composition non conforme à l'invention comprenant un SBR de Tg=-65°C avec un agent de modification de formule générale (I);
- la composition C1 est une composition selon l'invention comprenant un SBR de Tg=-48°C avec agent de modification de formule générale (I).

Le tableau I donne la formulation des différentes compositions T1 à T3 et C1 ; les taux sont exprimés en pce. Toutes les compositions (T1 à T3 et C1) comprennent un système de réticulation classiquement utilisé dans la fabrication de bandes de roulement pour pneumatique ; ce système de réticulation comprenant notamment du soufre, du ZnO de l'acide stéarique et un accélérateur.

**Tableau 1**

| | **T1** | **T2** | **T3** | **C1** |
|---|---|---|---|---|
| **SBR (1)** | (-) | 80 | (-) | 80 |
| **SBR (2)** | 80 | (-) | 80 | (-) |
| **BR (3)** | 20 | 20 | 20 | 20 |
| **Silice (4)** | 65 | 65 | 65 | 65 |
| **Noir de carbone (5)** | 4 | 4 | 4 | 4 |
| **Résine (6)** | 10 | 10 | 10 | 10 |
| **Agent de modification de formule (I) (7)** | (-) | (-) | 1,28 | 1,28 |
| **Agent de couplage (8)** | 6,5 | 6,5 | 6,5 | 6,5 |
| **DPG (9)** | 0,9 | 0,9 | 0,9 | 0,9 |
| **Antioxydant (10)** | 2 | 2 | 2 | 2 |
| **Paraffine** | 1 | 1 | 1 | 1 |

| | | | | |
|---|---|---|---|---|
| *(1) SBR solution non fonctionnel, non étendu, avec 24% de motifs polybutadiène 1,2* ; *26.5% de motifs styrène et une Tg = -48°C ;* *(2) SBR solution non fonctionnel, non étendu, avec 24% de motifs polybutadiène 1,2 : 15,5% de motif styrène, et une Tg = -65° C ;* *(3 Polybutadiène Néodyme avec 98% de motifs 1,4-cis butadiène et une Tg = -108°C ;* *(4) Silice « Zeosil 1165 MP » type « HDS » de la société Solvay* ; *(5) Noir de carbone N134 ;* *(6) Résine coupe C5*/*C9 commercialisée par la société Cray Valley sous la dénomination « Résine THER 8644 » (Tg = 44°C) ;* *(7) Agent de modification de formule (I) : le 2,4,6-trimethyl-3-(2-(2-oxoimidazolidin-1-yl)ethoxy) nitriloxide synthétisé selon le protocole décrit le document* WO 2012/007441 *(8) Agent de couplage : TESPT (« Si69 » de la société Evonik* - *Degussa) ;* *(9) Diphénylguanidine (« Perkacit » DPG de la société Flexsys) ;* *(10) N-1,3-diméthylbutyl-N-phényl-para-phénylènediamine commercialisée par la société Flexsys sous la dénomination "Santoflex 6-PPD".* | | | | |

Les propriétés des compositions après cuisson à 150°C pendant 45 min sont présentées dans le tableau 2 ci-dessous.

| | **T1** | **T2** | **T3** | **C1** |
|---|---|---|---|---|
| **G*50% (MPa)** | 2,1 | 1,9 | 2,0 | 1,9 |
| **tan(δ)max** | 0,185 | 0,190 | 0,154 | 0,170 |
| **tan(δ)**_{-20°C} | 0,389 | 0,631 | 0,325 | 0,711 |

D'après le tableau 2, on constate, à rigidité équivalente (valeur de G^{∗}50%), que la composition T2 non conforme à l'invention comprenant un SBR de haute Tg non modifié permet, par rapport à la composition T1 non conforme comprenant un SBR de basse Tg non modifié, une amélioration significative de la performance d'adhérence sur sol mouillé (valeur tan(δ)_{-20°C}) accompagnée d'une dégradation de la performance résistance au roulement (valeur tan(δ)max). Le compromis de performances adhérence sur sol mouillé/résistance au roulement/résistance à l'usure n'est pas amélioré pour la composition T2 par rapport à la composition T1 non conforme à l'invention.

Par ailleurs, on constate, à rigidité équivalente, que la composition T3 non conforme à l'invention comprenant un SBR basse Tg modifié par l'agent de modification de formule générale (I) permet, par rapport à la composition T1 non conforme comprenant un SBR basse Tg non modifié, une amélioration significative de la performance résistance au roulement mais au détriment de la performance d'adhérence au sol mouillé. Le compromis de performances adhérence sur sol mouillé/résistance au roulement/résistance à l'usure n'est pas amélioré pour la composition T3 par rapport à la composition T1 non conforme à l'invention.

De manière surprenante, à rigidité équivalente, on constate que la composition C1 conforme à l'invention comprenant un SBR haute Tg modifié par l'agent de modification de formule générale (I) permet, par rapport à la composition T1 non conforme à l'invention, une amélioration significative à la fois de la performance résistance au roulement et de la performance adhérence sur sol mouillé. La composition C1 conforme à l'invention présente donc, de manière surprenante, un compromis de performances adhérence sur sol mouillé/résistance au roulement/résistance à l'usure amélioré par rapport à la composition T1 non conforme à l'invention.

## Revendications

1. Pneumatique destiné à équiper un véhicule portant de lourdes charges, ce pneumatique comportant une bande de roulement ayant au moins une composition de caoutchouc à base d'au moins:
- une matrice élastomère comprenant à titre majoritaire un copolymère à base de styrène et de butadiène ayant une température de transition vitreuse Tg strictement supérieure à -65°C et inférieure ou égale à -30°C,
- une charge renforçante comprenant à titre majoritaire de la silice,
- un système de réticulation chimique,
- un agent de couplage entre la matrice d'élastomère et la charge renforçante,
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition va de 2 à 17 pce, de préférence de 2 à 12 pce et,
- un agent de modification dudit copolymère à base de styrène et de butadiène, éventuellement déjà greffé sur ledit copolymère, ledit agent de modification étant un composé 1,3-dipolaire de formule générale (I) :
A-E-D (I)
o le symbole D représente un groupe fonctionnel comprenant au moins un atome d'azote et étant susceptible de se lier audit copolymère par une cycloaddition de type [3+2] sur une double liaison carbone-carbone de la chaîne dudit copolymère,
o le symbole E représente un groupe espaceur divalent reliant le groupe D au groupe A,
o A représente un groupe fonctionnel choisi parmi les alkyles en C₁-C₂₀, les alkylaryles en C₇-C₁₈, les arylalkyles en C₇-C₁₈, les hétérocycles azotés de 5 à 6 atomes éventuellement substitués, les hétérocycles soufrés de 5 à 6 atomes éventuellement substitués, les groupes esters, les groupes phosphates, les groupes dialkylaminos et les groupes associatifs comprenant au moins un atome d'azote.

2. Pneumatique selon la revendication 1, dans lequel le groupe fonctionnel D de l'agent de modification comprend une fonction oxyde de nitrile, une fonction nitrone ou une fonction nitrile imine.

3. Pneumatique selon la revendication 1 ou 2, dans lequel le groupe espaceur E est une chaîne alkyle linéaire ou ramifiée en C₁-C₂₄, de préférence C₁-C₁₀ éventuellement comprenant un ou plusieurs hétéroatomes choisis parmi les atomes d'azote, de soufre et d'oxygène.

4. Pneumatique selon l'une quelconque des revendications 1 à 3, dans lequel le groupe D de l'agent de modification est un groupe de formule (II) : 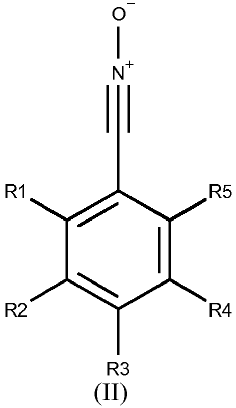 dans laquelle :
- R1, R2, R3, R4, R5, identiques ou différents, représentent un atome d'hydrogène, un atome d'halogène, un alkyle en C₁-C₅, un alcoxyle en C₁-C₅ ou une liaison covalente permettant le rattachement au groupe espaceur E;
- à la condition qu'au moins un des R1, R2, R3, R4, R5 représente ladite liaison covalente.

5. Pneumatique selon l'une quelconque des revendications 1 à 4, dans lequel le groupe A est un groupe associatif comprenant au moins un atome d'azote, ledit groupe associatif étant choisi parmi les formules suivantes (IV) à (VIII) 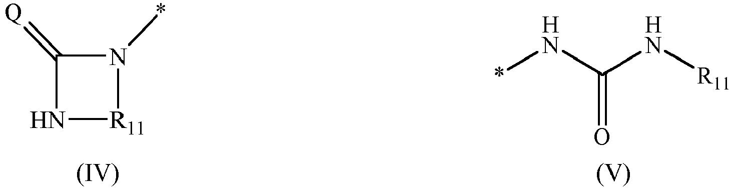 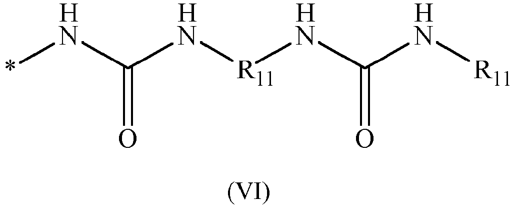 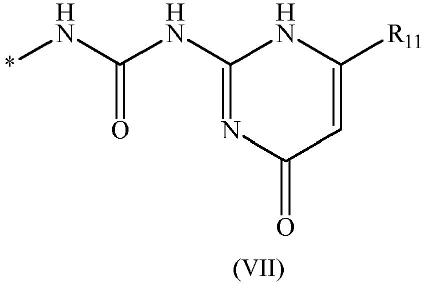 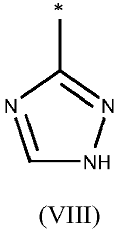 dans lesquelles:
- R11 représente un groupe hydrocarboné pouvant éventuellement contenir des hétéroatomes,
- Q représente un atome d'oxygène ou de soufre ou NH, de préférence un atome d'oxygène, et
- le symbole ^{∗} représente le rattachement au groupe espaceur E.

6. Pneumatique selon l'une quelconque des revendications 1 à 5, dans lequel l'agent de modification est choisi parmi les composés de formules ci-dessous (IX) à (XVIII) et leurs formes mésomères :

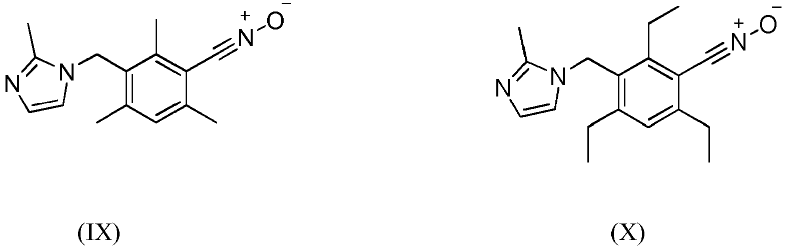

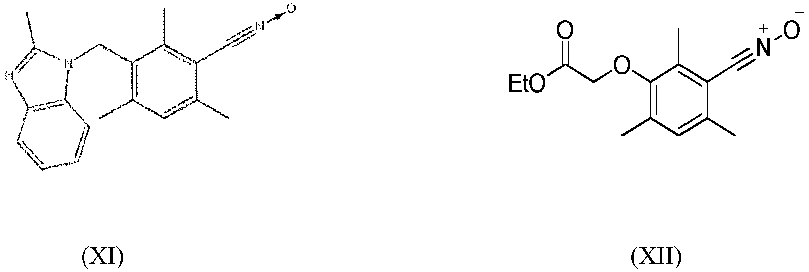

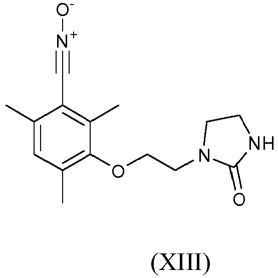

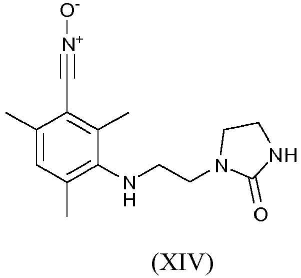

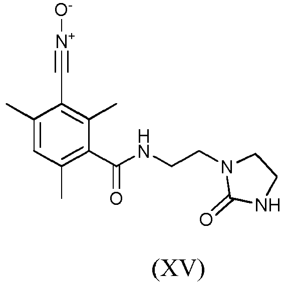

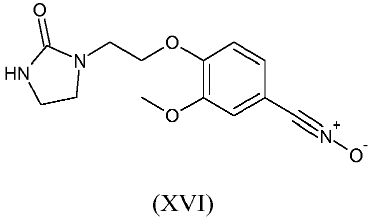

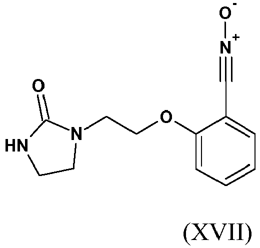

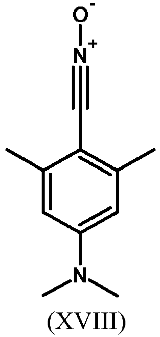

7. Pneumatique selon l'une quelconque la revendication 6, dans lequel l'agent de modification est choisi parmi les composés de formules (XIV), (XV), (XVI) et (XVIII) et leurs formes mésomères.

8. Pneumatique selon l'une quelconque des revendications 1 à 7, dans lequel le taux d'agent de modification va de 0,01 à 50 % molaire, de préférence de 0,01 à 5 % molaire et de façon plus préférentielle de 0,01% à 3 % molaire.

9. Pneumatique selon l'une quelconque des revendications 1 à 8, dans lequel le copolymère à base de styrène et de butadiène a une température de transition vitreuse allant de -60 à -40°C.

10. Pneumatique selon l'une quelconque des revendications 1 à 9, dans lequel la matrice élastomère comprend en outre au moins un deuxième élastomère diénique différent du copolymère à base de styrène et de butadiène.

11. Pneumatique selon la revendication 10, dans lequel le deuxième élastomère diénique est choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence le deuxième élastomère diénique est un polybutadiène.

12. Pneumatique selon les revendications 10 ou 11, dans lequel le taux du deuxième élastomère diénique va de 5 à 49 pce, de préférence de 15 à 35 pce.

13. Pneumatique selon l'une des revendications 1 à 12, dans lequel la composition comprend en outre du noir de carbone.

14. Pneumatique selon l'une quelconque des revendications 1 à 13, dans lequel le taux de la charge renforçante va de 55 à 200 pce, de préférence de 55 à 150 pce, de manière plus préférée de 55 à 80 pce.

15. Pneumatique selon l'une quelconque des revendications 1 à 14, **caractérisé en ce qu'**il est destiné à équiper un véhicule poids-lourd ou un bus.

## Patentansprüche

1. Reifen zur Ausstattung eines schweren Lasten tragenden Fahrzeugs, wobei diese Reifen eine Lauffläche umfasst, die mindestens eine Kautschukzusammensetzung auf Basis von mindestens:
- einer Elastomermatrix, die hauptsächlich ein Copolymer auf Basis von Styrol und Butadien mit einer Glasübergangstemperatur Tg, die streng größer als -65 °C und kleiner oder gleich -30 °C ist,
- einem verstärkenden Füllstoff, der hauptsächlich Kieselsäure umfasst,
- einem chemischen Vernetzungssystem,
- einem Mittel zum Kuppeln zwischen der Elastomermatrix und dem verstärkenden Füllstoff,
- einem Weichmachersystem, umfassend 2 bis 15 phe, vorzugsweise 2 bis 10 phe, mindestens eines Weichmacherharzes mit einer Glasübergangstemperatur Tg größer oder gleich 20 °C, wobei der Gesamtgehalt des Weichmachersystems in der Zusammensetzung im Bereich von 2 bis 17 phe, vorzugsweise von 2 bis 12 phe, liegt, und
- einem Mittel zum Modifizieren des Copolymers auf Basis von Styrol und Butadien, das gegebenenfalls bereits auf das Copolymer aufgepfropft ist, wobei es sich bei dem Modifizierungsmittel um eine 1,3-dipolare Verbindung der allgemeinen Formel (I) handelt:
A-E-D (I)
o das Symbol D für eine funktionelle Gruppe steht, die mindestens ein Stickstoffatom umfasst und durch eine [3+2]-Cycloaddition an eine Kohlenstoff-Kohlenstoff-Doppelbindung der Kette des Copolymers binden kann,
o das Symbol E für eine zweiwertige Spacergruppe steht, die die Gruppe D mit der Gruppe A verbindet,
o A für eine bifunktionelle Gruppe steht, die aus C₁-C₂₀-Alkylgruppen, C₇-C₁₈-Alkylarylgruppen, C₇-C₁₈-Arylalkylgruppen, gegebenenfalls substituierten Stickstoffheterocyclen mit 5 bis 6 Atomen, gegebenenfalls substituierten Schwefelheterocyclen mit 5 bis 6 Atomen, Estergruppen, Phosphatgruppen, Dialkylaminogruppen und assoziativen Gruppen mit mindestens einem Stickstoffatom ausgewählt ist,
aufweist.

2. Reifen nach Anspruch 1, wobei die funktionelle Gruppe D des Modifizierungsmittels eine Nitriloxidfuntion, eine Nitronfunktion oder eine Nitriliminfunktion umfasst.

3. Reifen nach Anspruch 1 oder 2, wobei die Spacergruppe E für eine lineare oder verzweigte C₁-C₂₄- und vorzugsweise C₁-C₁₀-Alkylkette, die gegebenenfalls ein oder mehrere Heteroatome, die aus Stickstoff-, Schwefel- und Sauerstoffatomen ausgewählt sind, umfasst, steht.

4. Reifen nach einem der Ansprüche 1 bis 3, wobei es sich bei der Gruppe D des Modifizierungsmittels um eine Gruppe der Formel (II) handelt: 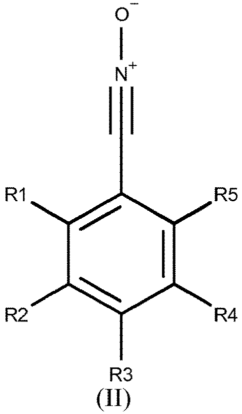 in der:
- R1, R2, R3, R4, R5 gleich oder verschieden sind und für ein Wasserstoffatom, ein Halogenatom, ein C₁-C₅-Alkyl, ein C₁-C₅-Alkoxyl oder eine kovalente Bindung, die die Anbindung an die Spacergruppe E ermöglicht, stehen;
- mit der Maßgabe, dass mindestens eines von R1, R2, R3, R4, R5 für die kovalente Bindung steht.

5. Reifen nach einem der Ansprüche 1 bis 4, wobei es sich bei der Gruppe A um eine assoziative Gruppe mit mindestens einem Stickstoffatom handelt, wobei die assoziative Gruppe aus den folgenden Formeln (IV) bis (VIII) ausgewählt ist: 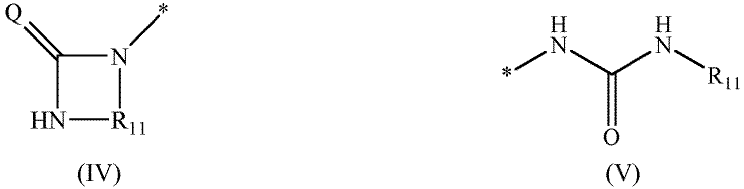 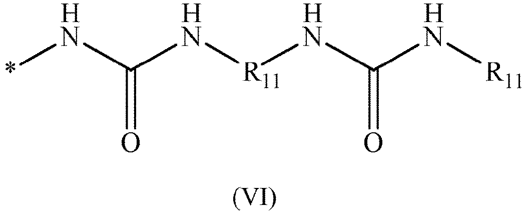 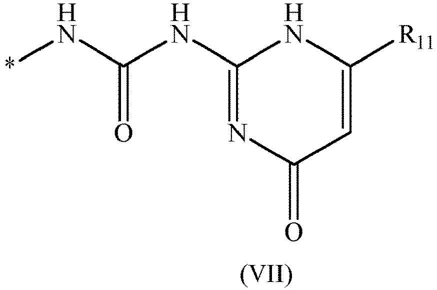 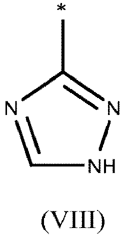 in denen:
- R11 für eine Kohlenwasserstoffgruppe, die gegebenenfalls Heteroatome enthalten kann, steht,
- Q für ein Sauerstoff- oder Schwefelatom oder NH, vorzugsweise ein Sauerstoffatom, steht und
- das Symbol * für die Anbindung an die Spacergruppe E steht.

6. Reifen nach einem der Ansprüche 1 bis 5, wobei das Modifizierungsmittel aus den Verbindungen der nachstehenden Formeln (IX) bis (XVIII) und ihren mesomeren Formen ausgewählt ist:

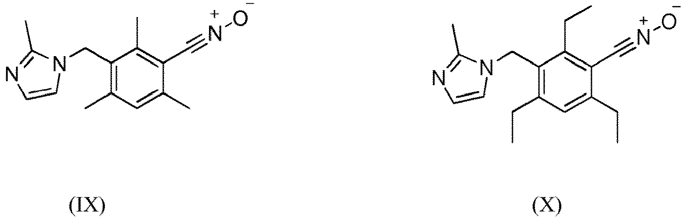

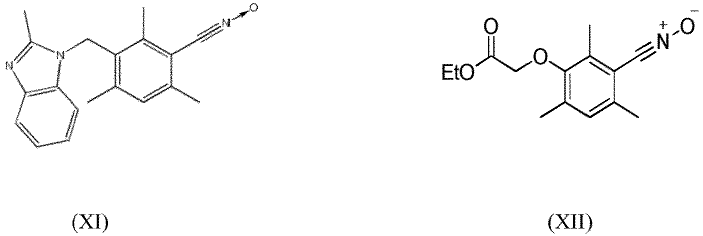

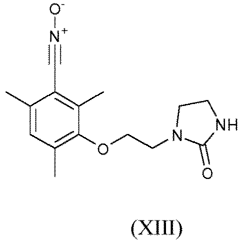

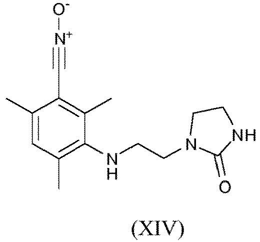

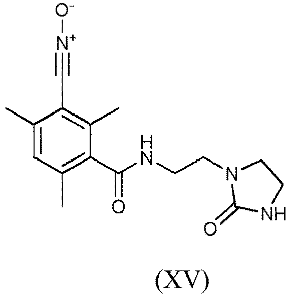

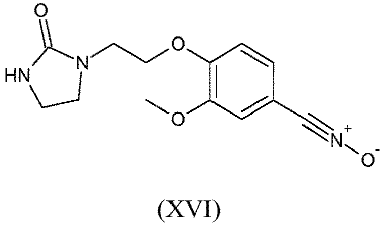

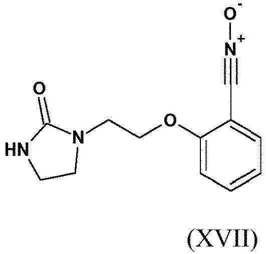

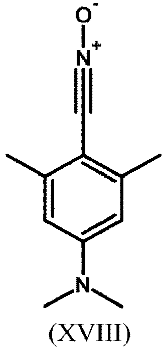

7. Reifen nach Anspruch 6, wobei das Modifizierungsmittel aus den Verbindungen der Formeln (XIV), (XV), (XVI) und (XVIII) und ihren mesomeren Formen ausgewählt ist.

8. Reifen nach einem der Ansprüche 1 bis 7, wobei der Gehalt an Modifizierungsmittel im Bereich von 0,01 bis 50 Mol-%, vorzugsweise von 0,01 bis 5 Mol-% und weiter bevorzugt von 0,01 bis 3 Mol-% liegt.

9. Reifen nach einem der Ansprüche 1 bis 8, wobei das Copolymer auf Basis von Styrol und Butadien eine Glasübergangstemperatur im Bereich von -60 bis -40 °C aufweist.

10. Reifen nach einem der Ansprüche 1 bis 9, wobei die Elastomermatrix außerdem mindestens ein zweites Dienelastomer, das von dem Copolymer auf Basis von Styrol und Butadien verschieden ist, umfasst.

11. Reifen nach Anspruch 10, wobei das zweite Dienelastomer aus der Gruppe bestehend aus Polybutadienen, Naturkautschuk, synthetischen Isoprenen, Butadien-Copolymeren, die von Butadien-Styrol-Copolymeren verschieden sind, Isopren-Copolymeren und Mischungen dieser Polymere und Copolymere ausgewählt ist; vorzugsweise das zweite Dienelastomer ein Polybutadien ist.

12. Reifen nach Anspruch 10 oder 11, wobei der Gehalt des zweiten Dienelastomers im Bereich von 5 bis 49 phe, vorzugsweise von 15 bis 35 phe, liegt.

13. Reifen nach einem der Ansprüche 1 bis 12, wobei die Zusammensetzung außerdem Ruß umfasst.

14. Reifen nach einem der Ansprüche 1 bis 13, wobei der Gehalt des verstärkenden Füllstoffs im Bereich von 55 bis 200 phe, vorzugsweise von 55 bis 150 phe, weiter bevorzugt von 55 bis 80 phe, liegt.

15. Reifen nach einem der Ansprüche 1 bis 14, **dadurch gekennzeichnet, dass** er zur Ausstattung eines Schwerlastfahrzeugs oder eines Busses vorgesehen ist.

## Claims

1. Tyre intended to equip a vehicle bearing heavy loads, this tyre comprising a tread including at least one rubber composition based on at least:
- an elastomer matrix predominantly comprising a copolymer based on styrene and butadiene having a glass transition temperature Tg strictly above -65°C and below or equal to -30°C,
- a reinforcing filler predominantly comprising silica,
- a chemical crosslinking system,
- an agent for coupling between the elastomer matrix and the reinforcing filler,
- a plasticizing system comprising from 2 to 15 phr, preferably from 2 to 10 phr, of at least one plasticizing resin having a glass transition temperature Tg of greater than or equal to 20°C, and of which the total content of the plasticizing system in the composition ranges from 2 to 17 phr, preferably from 2 to 12 phr, and
- an agent for modifying said copolymer based on styrene and butadiene, optionally already grafted onto said copolymer, said modifying agent being a 1,3-dipolar compound of general formula (I):
A-E-D (I)
o the symbol D represents a functional group comprising at least one nitrogen atom and being capable of bonding to said copolymer via a cycloaddition of [3+2] type on a carbon-carbon double bond of the chain of said copolymer,
o the symbol E represents a divalent spacer group connecting group D to group A,
o A represents a functional group chosen from C₁-C₂₀ alkyls, C₇-C₁₈ alkylaryls, C₇-C₁₈ arylalkyls, optionally substituted nitrogen-based heterocycles of 5 to 6 atoms, optionally substituted sulfur-based heterocycles of 5 to 6 atoms, ester groups, phosphate groups, dialkylamino groups and associative groups comprising at least one nitrogen atom.

2. Tyre according to Claim 1, in which the functional group D of the modifying agent comprises a nitrile oxide function, a nitrone function or a nitrile imine function.

3. Tyre according to Claim 1 or 2, in which the spacer group E is a linear or branched C₁-C₂₄, preferably C₁-C₁₀, alkyl chain optionally comprising one or more heteroatoms chosen from nitrogen, sulfur and oxygen atoms.

4. Tyre according to any one of Claims 1 to 3, in which the group D of the modifying agent is a group of formula (II): 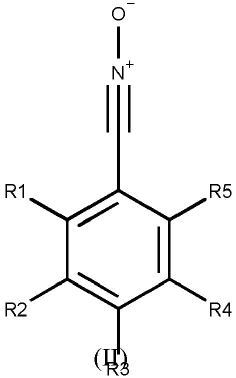 in which:
- R1, R2, R3, R4, R5, which may be identical or different, represent a hydrogen atom, a halogen atom, a C₁-C₅ alkyl, a C₁-C₅ alkoxyl or a covalent bond enabling attachment to the spacer group E;
- on condition that at least one from among R1, R2, R3, R4 and R5 represents said covalent bond.

5. Tyre according to any one of Claims 1 to 4, in which the group A is an associative group comprising at least one nitrogen atom, said associative group being chosen from formulae (IV) to (VIII) below: 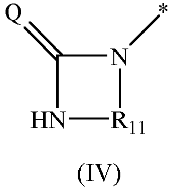 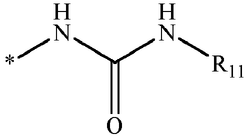 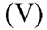 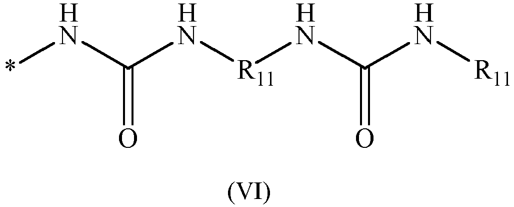 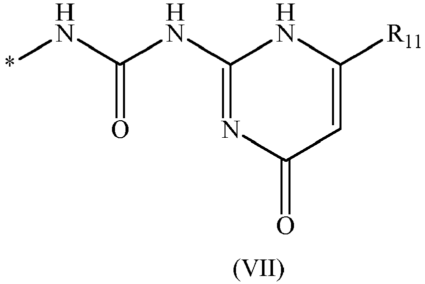 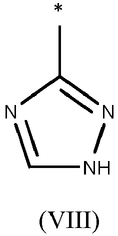 in which:
- R11 represents a hydrocarbon-based group that may optionally contain heteroatoms,
- Q represents an oxygen or sulfur atom or NH, preferably an oxygen atom, and
- the symbol ^{∗} represents the attachment to the spacer group E.

6. Tyre according to any one of Claims 1 to 5, in which the modifying agent is chosen from the compounds of formulae (IX) to (XVIII) below and the mesomeric forms thereof:

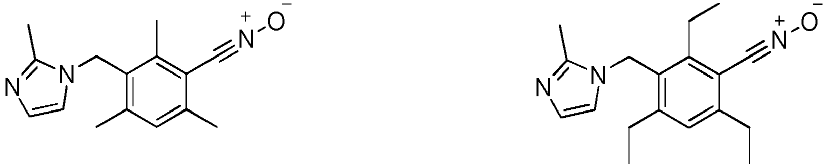

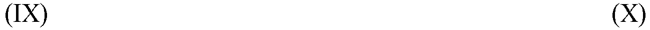

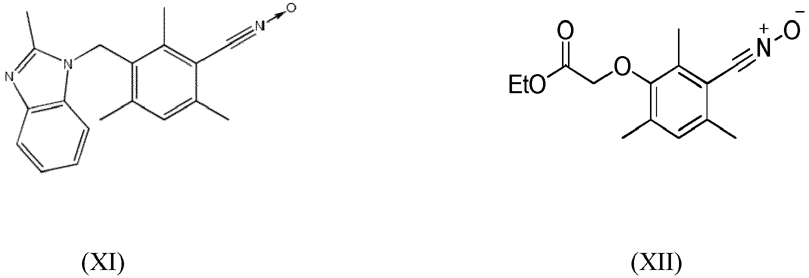

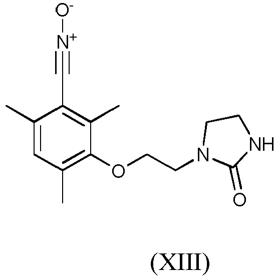

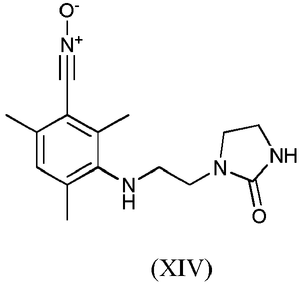

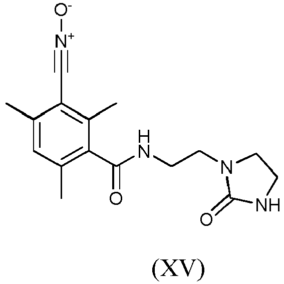

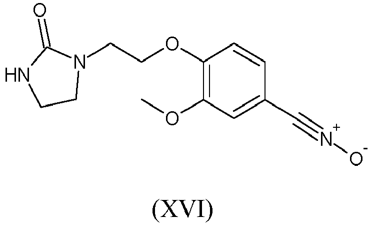

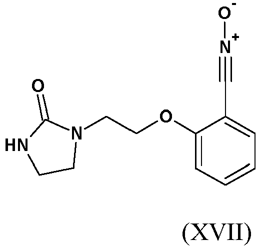

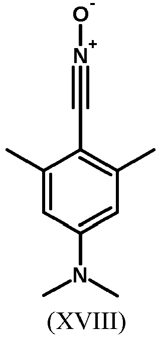

7. Tyre according to any one of Claim 6, in which the modifying agent is chosen from the compounds of formulae (XIV), (XV), (XVI) and (XVIII) and the mesomeric forms thereof.

8. Tyre according to any one of Claims 1 to 7, in which the content of modifying agent ranges from 0.01 to 50 mol%, preferably from 0.01 to 5 mol% and more preferentially from 0.01 to 3 mol%.

9. Tyre according to any one of Claims 1 to 8, in which the copolymer based on styrene and butadiene has a glass transition temperature ranging from -60 to -40°C.

10. Tyre according to any one of Claims 1 to 9, in which the elastomer matrix further comprises at least one second diene elastomer different from the copolymer based on styrene and butadiene.

11. Tyre according to Claim 10, in which the second diene elastomer is chosen from the group consisting of polybutadienes, natural rubber, synthetic isoprenes, butadiene copolymers other than butadiene-styrene copolymers, isoprene copolymers, and mixtures of these polymers and copolymers; preferably, the second diene elastomer is a polybutadiene.

12. Tyre according to Claim 10 or 11, in which the content of the second diene elastomer ranges from 5 to 49 phr, preferably from 15 to 35 phr.

13. Tyre according to one of Claims 1 to 12, in which the composition also comprises carbon black.

14. Tyre according to any one of Claims 1 to 13, in which the content of the reinforcing filler ranges from 55 to 200 phr, preferably from 55 to 150 phr, more preferably from 55 to 80 phr.

15. Tyre according to any one of Claims 1 to 14, **characterized in that** it is intended to equip a heavy-duty vehicle or a bus.
